# EUROPEAN PATENT SPECIFICATION

(11) **EP 1 878 525 B1**
(45) Date of publication and mention of the grant of the patent: **17.11.2010**
(21) Application number: 07111581.0
(22) Date of filing: 03.07.2007
(51) Int. Cl.: B23D 45/04, B23D 47/12

(54) **Cutter**
Schneidegerät
Appareil de coupage

(30) Priority: 13.07.2006 KR 20060065720
(43) Date of publication of application: 16.01.2008
(73) Proprietor: Gu Choi, Iee, 486 Goduck-Dong Kangdong-gu, Seoul (KR)
(72) Inventor: Gu Choi, Iee, 486 Goduck-Dong Kangdong-gu, Seoul (KR)
(74) Representative: Ziebig, Marlene

(56) References cited:
- DE-A1- 3 127 217
- DE-A1- 19 805 857
- US-A1- 2002 127 960
- US-B1- 6 866 568

## Description

The present invention relates to a cutter in which belts are used to transfer the force between motor and rotary cutting blade so that the rotary force may be transferred more stably and the cutter may be maintained simply. A cutter according to the preamble of claim 1 is known from US 6866 568.

### Background

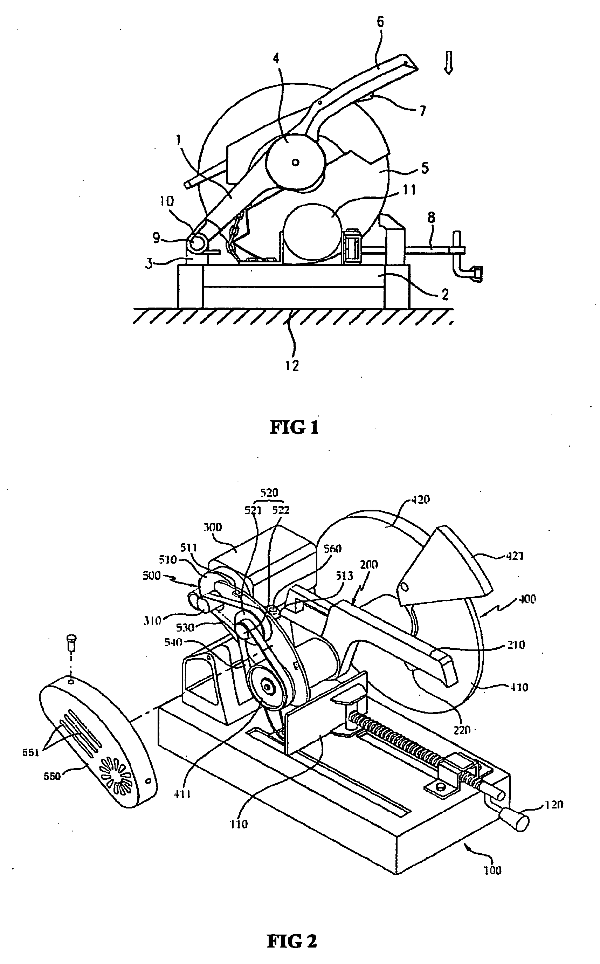

In general, a cutter cuts hard metals with its cutting blade rotating in a high speed, and as shown in Fig. 1, the cutter contains a cutting part provided with a device for cutting a workpiece; a base part for securing the workpiece and supporting the cutting part; and a connection part for connecting the base part and the cutting part.

Specifically, the above cutting part comprises: a machine frame 1; a motor 4 mounted inside the machine frame 1 at one side and producing a driving force; a cutting blade 5 mounted on the machine frame 1 and being rotated with the driving force of the said motor 4 to cut the workpiece 11; a frame handle 6 formed on the machine frame 1 integrally and moving the machine frame 1 up and down; a switch 7 mounted on the frame handle 6 and turning on and shutting off the power supply of motor 4.

Furthermore, the said base part consists of a base 2 and a bench clamp 8 mounted on the upper portion of the base 2 and securing the workpiece 11.

And, the said connection part 3 is connected to the base 2 at one end thereof, and is rotatablely connected to the cutting part through a hinge 9 at the other end. A spring 10 is mounted at one side of the hinge 9 and the machine frame rotates by the elasticity of the spring 10.

The operation state of the cutter with the above structure is described as follows:

Firstly, the workpiece to be processed is secured on the bench clamp 8, and the switch 7 mounted on the frame handle 6 is turned on (ON) to drive the motor 4 so that the cutting blade 5 rotates with the driving force of motor 4.

At this time, the frame handle 6 is pressed down, and the machine frame 1 rotates downward with the hinge 9 as pivot. In this way, the workpiece 11 is cut with the rotating cutting blade.

However, in the above cutter, the coupling between the rotation shaft of cutting blade 5 and the motor 4 is obtained by the engagement of gears, thus due to the abrasion of the engaging parts occurred in high speed rotation, the rotary force may not be transferred enough evenly.

Especially, when abrasion of the engaging parts of the cutting blade 5 and the motor 4 of the above cutter occurs, it can not be repaired on site, but had to be repaired at a special maintenance depot. So the costs in labour and time are high.

Moreover, when changing the gears in the cutter, most of parts, such as the cutting part and the cutting blade, etc must be removed one by one. So the time consumption in repairing is great.

And, in the above cutter, since the engagement of the gears is used to transfer the force between the motor and the cutting blade, big noise is produced in operating.

US 6,866,568 B1 describes a circular saw - a cutter which comprises an operating bench, a machine frame, a motor, a cutting part and a transmission part having a fixing plate, a reduction pulley, a first and a second belt.

DE 198 05 857 A1 discloses a cutter showing a tension regulating means where a special tension roll is provided.

### Summary

The invention intend to solve the above problems, and its object is to transfer the force between the motor and the rotary cutting blade through twostage belts so that it provide a cutter which transfers the rotary force stably, has low noise and is convenient to be maintained.

Another object of the invention is to provide a tension regulating means for regulating the tension of the belt in the cutter, so as to regulate the tension of the belt.

The above objects are achieved by a cutter according to claim 1.

Wherein, the said transmission part is provided with a tension regulating means for regulating the tension of the belts, and in the tension regulating means, the reduction pulley is mounted movably in a cutting groove formed on the fixing plate and a screw bolt passes through a fixing sheet formed at upside of the cutting groove of the fixing plate and makes a threaded connection with the axis of the reduction pulley, so that the reduction pulley rises and falls as rotation of the screw bolt.

Moreover, on the fixing plate of transmission part is provided removably with a casing for overlaying its circumference, and a plurality of through holes are formed on the outer surface of the casing.

Moreover, a voltage regulator for regulating voltage is provided on a power connecting part of the switch provided on the other end of the machine frame.

Moreover, a rotatable guide plate is mounted at end portion of guard board of the cutting part so that the spark produced in metal cutting of the cutting blade moves downwards along the inner surface of the guard board.

Moreover, the fixing plate forms a shape of arch bending upwards from two side portions on which the driving pulley and driven pulley are mounted to the center portion on which the reduction pulley is mounted.

In the cutter having the above structure according to the present invention, the driving force is transferred between the motor and the cutting blade through the transmission part consisting of the first belt, the second belt and the reduction pulley. So the noise is significantly reduced, and when the cutting blade is overloaded, the motor may run idly, thereby significantly reducing the failure rate. And the cutter has the advantages of convenient maintenance and low repairing cost.

Moreover, after a two-stage deceleration of the first belt, the second belt and the reduction pulley, the rotary force of the motor is transferred to the cutting blade so that an optimum rotary speed required for cutting workpiece can be provided.

Moreover, by setting a tension regulating means for regulating the tension of the first belt and the second belt on the cutter, a more stable rotary force can be provided, and the replacing period of the belts is extended.

Moreover, by providing a casing for the transmission part, it can prevent the occurrence of accident, and also provide a better appearance.

### Brief Description of the Drawings

Fig. 1 is a stereograph of prior cutter;
Fig. 2 is a stereograph of the cutter according to the present invention;
Fig. 4 is a side view of the cutter of Fig.2;
Fig. 5 is a schematic drawing of the tension regulating means of the present invention;
Fig. 6 is a partial sectional view showing the state of voltage regulator in the present invention;

### Reference numbers in the drawings:

| | |
|---|---|
| 100: operating bench | 110: bench clamp |
| 120: hand-operated crank | |
| 200: machine frame | 210: handle |
| 220: switch | 230: voltage regulator |
| 300: motor | 310: driving pulley |
| 400: cutting part | 410: cutting blade |
| 420: guard board | 421: guide plate |
| 500, 500': transmission part | 510, 510': fixing plate |
| 511, 513: fixing sheet | 512: cutting groove |
| 520: reduction pulley | 521: major diameter pulley |
| 522: minor diameter pulley | 530: first belt |
| 540: second belt | 550: casing |
| 551: through hole | 560: screw bolt |
| 570: third belt | 580: guide pulley |

### Detailed Description of Embodiments

Hereinafter, the typical example of the invention will be described in detail with reference to Fig. 2, 4 to Fig. 6.

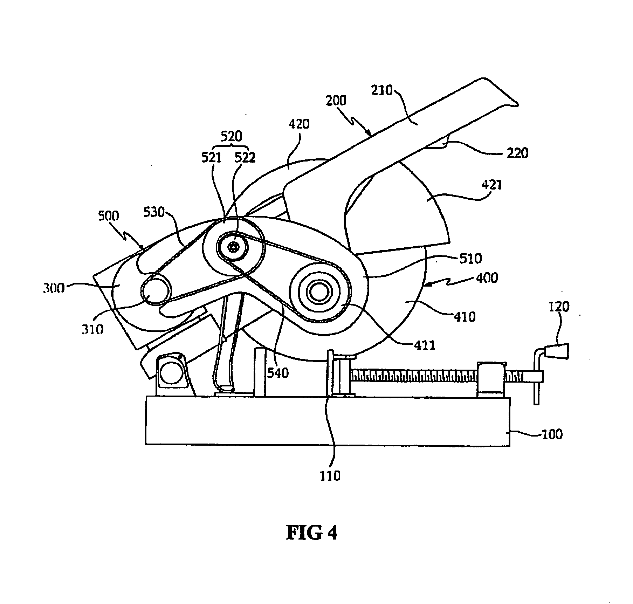

As shown in Fig. 2 and Fig. 4, the cutter of the invention cut hard metals with its cutting blade rotating in a high speed, the cutter comprises an operating bench 100 placed on the ground; a machine frame 200 rotatablely fixed on the operating bench 100 by one end, and a switch was provided on the other end; a motor 300 mounted at one end of the machine frame 200; a cutting part 400, provided with a cutting blade positioned at one side of the machine frame 200; a transmission part 500 for joining the motor 300 and the cutting blade through belts.

The operating bench 100 is used to place workpieces. The machine frame 200 is hinge jointed on one end of the operating bench rotatablely and a bench clamp 110 is mounted on it. The bench clamp 110 may move forwards and backwards through the rotation of the hand-operated crank 120 to secure and support the workpieces. A spring is provided on the hinge part to provide a restoring force for the machine frame 200 returning to the original position after being turned down.

The machine frame 200 was fixed on one end of the operating bench 100 rotatablely through a hinge, and a handle 210 is provided at the other end of the machine frame. A switch 220 for turning on and shutting off the power supply is provided on the handle 210. The motor 300 and the cutting part 400 are provided at one side of the machine frame 200.

The motor 300 is provided at one side of the machine frame 200, and the switch 220 is used to control the rotation of the motor to supply a rotary force.

The cutting part 400 is used to cut workpieces, and it comprises a cutting blade 410 mounted on a rotation shaft at one side of the machine frame 200; a guard board 420 configured to envelop the circumference of the cutting blade 410. The cutting blade 410 employs a disc mill knife. The motor 300 and the cutting blade 410 are joined with the transmission part 500.

Wherein, a rotatable guide plate 421 is mounted on end portion of the guard board 420 so that the spark produced when the cutting blade 410 is cutting metal materials moves downwards along the inner surface of the guard board, thereby preventing the spark or dust from spraying towards the operator.

The transmission part 500 is joined with the motor 300 and the cutting blade 410 and transfers the driving force through belts.

Namely, the transmission part 500 comprises a fixing plate 510 mounted on one side portion of the machine frame 200; a reduction pulley 520 mounted rotatablely on the fixing plate 510 and having twostep structure; a first belt 530 and a second belt 540 for joining the motor 300 and the reduction pulley 520 and joining the reduction pulley 520 and the cutting blade 410.

The fixing plate 510 is mounted by means of welding or bolt projecting on the side of machine frame 200 on which the rotation shaft of motor 300 and the rotation shaft of cutting blade 410.

The reduction pulley 520 decelerated the rotation of the motor in transferring the driving force. It consists of a major diameter pulley 521 and a minor diameter pulley 522 with different diameters formed integrally, and is mounted rotatablely on the center portion of front surface of the fixing plate 510.

Namely, in the reduction pulley 520, a rotation shaft is provided in the center of the minor pulley 522 and the major pulley 521 formed integrally. After passing through the fixing plate 510, the rotation shaft is fastened by a fixing means, such as nuts and the like.

The first belt 530 and second belt 540 are used to join the driving pulley 310 on the rotation shaft of the motor 300 and the major diameter pulley 521 of the reduction pulley 520 and joining the minor diameter pulley 522 of the reduction pulley 520 and the driven pulley 411 mounted on the rotation shaft of the cutting blade 410.

Wherein, the diameters of the driving pulley 310 and the minor diameter pulley 522 are 20 to 40 mm, and the diameters of the driven pulley 411 and major diameter pulley 521 are 60 to 80 mm.

In such a way, in the transmission part 500, the driving pulley 310 of motor 300 rotates to cause the movement of the first belt 530, and the movement of the first belt 530 also makes the major diameter pulley 521 of the reduction pulley 520 rotate, with the rotation of the major diameter pulley 521, the minor diameter pulley 522 causes the movement of the second belt 540 which in turn makes the driven pulley 411 rotate, so that the cutting blade 410 has a rotating speed of 3800 to 4200 rpm.

A casing 550 for overlaying the circumference of the fixing plate 510 is provided removably on the fixing plate 510 of the transmission part 500.

The casing 550 is used to protect the transmission part 500 with one side opening, the interior periphery of the opening overlays the exterior periphery of the fixing plate 510, and the casing is fixed on a fixing sheet 511 at outside of the fixing plate 510 by bolt joint.

Moreover, a plurality of through holes 551 are formed on the outer surface of the casing 550 so that air may circulated through the through holes 511 to prevent overheating inside the casing.

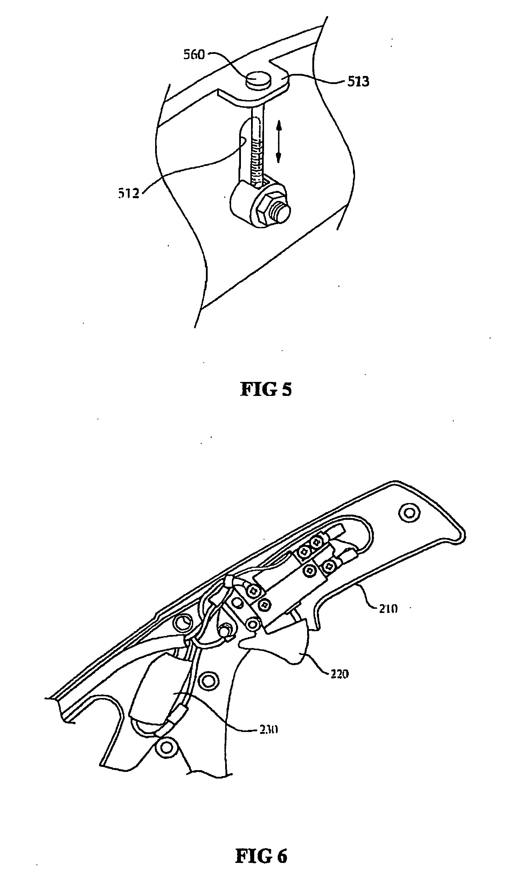

Moreover, as shown in Fig. 5, a tension regulating means for regulating the tension of the first belt 530 and the second belt 540 is mounted on the transmission part 500.

The construction of the tension regulating means is: the reduction pulley 520 is mounted movably in a cutting groove 512 formed on the fixing plate 510. A screw bolt 560 passes through a fixing sheet 513 formed at upside of the cutting groove 512 of fixing plate 510, and forms a threaded connection with a fixing member, such as nuts and the like, connected on axial portion of the guide pulley 520, so that the reduction pulley 520 may move up or down in the cutting groove 512 as rotation of the screw bolt 560 and the tension of the first belt 530 and the second belt 540 may be regulated.

As shown in Fig. 6, a voltage regulator 230 having the functions of voltage regulating and electromagnetic wave shielding is mounted on the power connecting part of the switch 220 which is mounted on the handle 210 of the machine frame 200. A stable voltage is supplied to the motor 300 through the voltage regulator 230 to prevent overvoltage being applied to the motor 300, and the occurrence of electromagnetic wave can be significantly reduced.

Moreover, the fixing plate 510 bends upwards from two side portions on which the driving pulley and driven pulley are mounted to center portion on which the reduction pulley 520 is mounted to form an arch in shape. In such a way, when the cutting blade 410 was used to cut a workpiece, the interference between the fixing plate 510 of the transmission part 500 and the workpiece can be avoided.

Hereinafter, the utilization method of the cutter having the above structure will be described.

Firstly, after the cutter is connected to the power supply, a workpiece is placed on the bench clamp 110 of the operating bench 100. The hand-operated crank is rotated to move the bench clamp 110 so as to secure the workpiece.

Next, the handle 210 is grasped and the switch 220 is turned on. The external power supply is applied to the motor 300, and the driving pulley 310 mounted on the rotation shaft of the motor 300 rotates.

Then, the first belt moves and causes the rotation of the major diameter pulley 521 as well as the minor diameter pulley 522 of the reduction pulley 520. In turn, the second belt moves, so that the driven pulley 411 and the cutting blade 410 rotate.

That is, the rotating speed is reduced first time by the first belt 530 joining the driving pulley 310 and the major diameter pulley 521 of the reduction pulley 520, and the rotating speed is reduced second time by the second belt 522 joining the driven pulley 411 and the minor diameter pulley 522 of the reduction pulley 520. Afterwards, a rotary force is transferred to the cutting blade 410 so that the rotating speed of the cutting blade 410 is 3800 to 4200 rpm.

At this time, a stable voltage is supplied to the motor 300 through the voltage regulator 230 mounted on the power connecting part of the switch 220.

When the cutting blade 410 rotates, the handle of the machine frame 200 is turned downwards, and the workpiece is cut with the outer circumference of the cutting blade 410.

When the first belt 530 and the second belt 540 are loose after a long time's running of the cutter, the casing 550 is removed from the fixing plate 510 and the screw bolt 560 is rotated to make the reduction pulley 520 move up and down in the cutting groove 512 of the fixing plate 510, so that the first belt 530 and the second belt 540 associated with the major diameter pulley 521 and the minor diameter pulley 522 of the reduction pulley 520 are tightened, thereby achieving the object of regulating the tension.

And when the first belt 530 and the second belt 540 are elongated to a predetermined length, the first belt 530 and the second belt 540 are removed from the driving pulley 310 the reduction pulley and the driven pulley 411, and a new first belt 530 and a new second belt 540 are applied to the driving pulley 310, the reduction pulley 520 and the driven pulley 411 respectively and then the tension is regulated.

After regulating the tension, the casing 550 is fixed to the fixing plate 510 in the same way as described above, as such to complete the maintenance of the cutter.

Hereinafter, another example of the invention will be described. The same reference numbers are used for representing the same members for which the detailed description is omitted.

## Claims

1. A cutter, which comprises
an operating bench (100);
a machine frame (200), which is rotatablely fixed on the operating bench (100) by one end, and a switch (220) is provided on the other end;
a motor (300), which is mounted at one end of the machine frame (200);
a cutting part (400), which is positioned at one side of the machine frame (200) and is provided with a cutting blade (410); and
a transmission part (500), which transfers the power of motor (300) to the cutting blade (410) through a belt (530, 540),
wherein, the transmission part (500), comprises: a fixing plate (510), which is mounted on one side portion of the machine frame (200), and a rotation shaft for the motor (300) and a rotation shaft for the cutting blade (410) are provided projecting on the side portion of the machine frame (200); a reduction pulley (520), which is rotatablely mounted on the fixing plate (510) and has a two step structure; a first belt (530) and a second belt (540) for joining a driving pulley (310) on the motor rotation shaft and a major diameter pulley (521) of the reduction pulley (520) and joining a minor diameter pulley (522) of the reduction pulley (520) and a driven pulley (411) on the rotation shaft of the cutting blade (410), **characterized in that** the transmission part (500), is provided with a tension regulating means for regulating the tension of the belts (530, 540),
and in the tension regulating means, the reduction pulley (520) is mounted movably in a cutting groove (512) formed on the fixing plate (510), and a screw bolt (560) passes through a fixing sheet (513) formed at upside of the cutting groove (512) of the fixing plate (510), and makes a threaded connection with the axis of the reduction pulley (520), so that the reduction pulley (520) rises and falls as rotation of the screw bolt (560).

2. The cutter according to claim 1, wherein:
a casing (550) for overlaying the circumference of the fixing plate (510) of the transmission part (500) is provided removable.

3. The cutter according to claim 2 wherein:
a plurality of through holes (551) are formed on the outer surface of the casing (550).

4. The cutter according to claim 2, wherein:
a voltage regulator (230) for regulating voltage is provided on a power connecting part of the switch (220) provided on the other end of the machine frame (200).

5. The cutter according to claim 2, wherein:
a rotatable guide plate (421) is mounted at end portion of guard board (420) of the cutting part so that the spark produced in metal cutting of the cutting blade moves downwards along the inner surface of the guard board (420).

6. The cutter according to claim 1, wherein:
the fixing plate (510) has a shape of arch that bends upwards from two side portions on which the driving pulley (310) and driven pulley (411) are mounted to center portion on which the reduction pulley (520) is mounted.

## Patentansprüche

1. Schneidegerät, umfassend
eine Arbeitsbank (100);
einen Maschinenrahmen (200), der mit einem Ende drehbar an der Arbeitsbank (100) befestigt und am anderen Ende mit einem Schalter (220) versehen ist;
einen Motor (300), der an einem Ende des Maschinenrahmens (200) montiert ist;
einen Schneideteil (400), der an einer Seite des Maschinenrahmens (200) angeordnet und mit einem Schneidblatt (410) versehen ist; und
einen Getriebeteil (500), der die Kraft des Motors (300) über einen Riemen (530, 540) auf das Schneidblatt (410) überträgt;
wobei der Getriebeteil (500) eine Befestigungsplatte (510) umfasst, die an einem Seitenteil des Maschinenrahmens (200) befestigt ist, und eine Drehwelle für den Motor (300) und eine Drehwelle für das Schneidblatt (410) bereitgestellt sind, die am Seitenteil des Maschinenrahmens (200) hervorstehen; eine Untersetzungsscheibe (520), die drehbar an der Befestigungsplatte (510) befestigt ist und einen zweistufigen Aufbau aufweist; einen ersten Riemen (530) und einen zweiten Riemen (540) zum Verbinden einer Antriebsriemenscheibe (310) an der Motordrehwelle mit einer Riemenscheibe (521) der Untersetzungsscheibe (520) mit größerem Durchmesser und zum Verbinden einer Riemenscheibe (522) der Untersetzungsscheibe (520) mit kleinerem Durchmesser mit einer angetriebenen Riemenscheibe (411) an der Drehwelle des Schneidblatts (410),
**dadurch gekennzeichnet, dass**
der Getriebeteil (500) mit einer spannungsregelnden Einrichtung zum Regeln der Spannung der Riemen (530, 540) versehen ist,
und die Untersetzungsscheibe (520) in der spannungsregelnden Einrichtung beweglich in einer Schneidenut (512) befestigt ist, die auf der Befestigungsplatte (510) ausgebildet ist, und ein Schraubenbolzen (560) durch ein Befestigungsblech (513) hindurch führt, das oben an der Schneidenut (512) der Befestigungsplatte (510) ausgebildet ist und eine Schraubverbindung mit der Achse der Untersetzungsscheibe (520) herstellt, so dass sich die Untersetzungsscheibe (520) mit der Drehung des Schraubenbolzens (560) hebt und senkt.

2. Schneidegerät nach Anspruch 1, wobei
ein Gehäuse (550) zur Abdeckung des Umfangs der Befestigungsplatte (510) des Getriebeteils (500) abnehmbar bereitgestellt ist.

3. Schneidegerät nach Anspruch 2, wobei
mehrere Durchgangsbohrungen (551) auf der Außenfläche des Gehäuses (550) ausgebildet sind.

4. Schneidegerät nach Anspruch 2, wobei
ein Spannungsregler (230) zur Regulierung der Spannung am Stromanschlussteil des Schalters (220) bereitgestellt ist, der am anderen Ende des Maschinenrahmens (200) bereitgestellt ist.

5. Schneidegerät nach Anspruch 2, wobei
eine drehbare Führungsplatte (421) am Endteil des Schutzschilds (420) des Schneideteils montiert ist, so dass Funken, die beim Schneiden von Metall mit dem Schneidblatt erzeugt werden, sich nach unten entlang der Innenfläche des Schutzschilds (420) bewegen.

6. Schneidegerät nach Anspruch 1, wobei
die Befestigungsplatte (510) die Form eines Bogens aufweist, der sich von zwei Seitenteilen aus nach oben krümmt, an denen die Antriebsriemenscheibe (310) und die angetriebene Riemenscheibe (411) am Mittelteil montiert sind, an dem die Untersetzungsscheibe (520) befestigt ist.

## Revendications

1. Appareil de coupe, qui comprend
un établi de travail (100),
un bâti de machine (200) qui est fixé de manière orientable sur l'établi de travail (100) par une extrémité et un commutateur (220) étant prévu sur l'autre extrémité,
un moteur (300), qui est monté à une extrémité du bâti de machine (200),
un organe de coupe (400), qui est positionné sur un côté du bâti de machine (200) et est pourvu d'une lame de coupe (410), et
un organe de transmission (500), qui transmet la puissance du moteur (300) à la lame de coupe (410) par l'intermédiaire d'une courroie (530, 540),
dans lequel, l'organe de transmission (500) comprend :
une plaque de fixation (510), qui est montée sur une portion latérale du bâti de machine (200), un arbre de rotation du moteur (300) et un arbre de rotation pour la lame de coupe (410) étant prévus en saillie de la portion latérale du bâti de machine (200),
une poulie de réduction (520), qui est montée de manière rotative sur la plaque de fixation (510) et a une structure à deux étages, et
une première courroie (530) et une seconde courroie (540), destinées respectivement à accoupler une poulie motrice (310) sur l'arbre de rotation du moteur à une poulie de diamètre le plus grand (521) de la poulie de réduction (520) et à accoupler une poulie de diamètre le plus petit (522) de la poulie de réduction 520) à une poulie menée (411) sur l'arbre de rotation de la lame de coupe (410),
**caractérisé en ce que**
l'organe de transmission (500) est pourvu d'un dispositif de réglage de tension destiné à régler la tension des courroies (530, 540),
et dans le dispositif de réglage de tension, la poulie de réduction (520) est montée de manière mobile dans une gorge de découpe (512) formée sur la plaque de fixation (510), et un boulon taraudé (560) passe à travers une tôle de fixation (513) façonnée sur le côté supérieur de la gorge de découpe (512) de la plaque de fixation (510) et forme une connexion filetée avec l'axe de la poulie de réduction (520), de telle sorte que la poulie de réduction (520) s'élève et descend à mesure de la rotation du boulon fileté (560).

2. Appareil de coupe selon la revendication 1, dans lequel :
un carter (550) destiné à recouvrir la périphérie de la plaque de fixation (510) de l'organe de transmission (500) est pourvu de façon à être démontable.

3. Appareil de coupe selon la revendication 2, dans lequel :
une pluralité de trous traversants (551) sont façonnés sur la surface extérieure du carter (550).

4. Appareil de coupe selon la revendication 2, dans lequel :
un régulateur de tension (230) destiné à réguler la tension est prévu sur un élément de connexion électrique du commutateur (220) prévu sur l'autre extrémité du bâti de machine (200).

5. Appareil de coupe selon la revendication 2, dans lequel :
une plaque de guidage orientable (421) est montée à une portion d'extrémité d'une plaque de protection (420) de l'organe de coupe de façon à ce que l'étincelle produite lors de la découpe du métal par la lame de coupe tombe vers le bas le long de la surface intérieure de la plaque de protection (420).

6. Appareil de coupe selon la revendication 1, dans lequel :
la plaque de fixation (510) a une forme d'arche courbé vers le haut à partir de deux portions latérales sur lesquelles la poulie motrice (310) et la poulie menée (411) sont montées en allant vers la portion centrale sur laquelle la poulie de réduction (520) est montée.
